# EUROPEAN PATENT APPLICATION

(11) **EP 4 804 280 A1**
(43) Date of publication of application: **09.09.2026**
(21) Application number: 24887361.4
(22) Date of filing: 29.05.2024
(51) Int. Cl.: H01M 10/0583

(54) **BATTERY CELL ASSEMBLY, MANUFACTURING METHOD THEREFOR, BATTERY CELL, BATTERY, AND ELECTRICAL DEVICE**

(30) Priority: 08.11.2023 CN 202311481974
(71) Applicant: Contemporary Amperex Technology Co., Limited, Ningde, Fujian 352100 (CN)
(72) Inventor: WU, Kai, Ningde, Fujian 352100 (CN); WU, Bingzhao, Ningde, Fujian 352100 (CN); HUANG, Gongxun, Ningde, Fujian 352100 (CN); WANG, Weiwei, Ningde, Fujian 352100 (CN); LIU, Dandan, Ningde, Fujian 352100 (CN)
(74) Representative: Ziebig Hengelhaupt Intellectual Property Attorneys Patentanwaltskanzlei PartGmbB
(86) International application number: PCT/CN2024/096075
(87) International publication number: WO 2025/097737

(57) **Abstract**

The present application relates to a battery cell assembly, a manufacturing method therefor, a battery cell, a battery and an electrical device. The battery cell assembly comprises a first electrode sheet, a plurality of second electrode sheets and separators. The separators are arranged on two opposite sides of the first electrode sheet and are combined with the first electrode sheet so as to form a combined sheet, and the combined sheet is configured to be continuously Z-folded so as to form a plurality of sub-combined sheets, there being arranged one second electrode sheet between any two adjacent sub-combined sheets. In the length direction of the second electrode sheets, an isolation layer is connected between at least one side edge of each second electrode sheet and each sub-combined sheet. Since the isolation layers can connect the second electrode sheets to the sub-combined sheets, the distance between the second electrode sheets and the sub-combined sheets is shortened, thereby reducing gaps at corners of the combined sheet, improving the transport dynamic performance of a battery, and reducing phenomena of lithium plating at edges. In addition, when lithium-plating accumulation occurs at the edges, the provision of the isolation layers will stop dendrites generated by the lithium plating from puncturing the separators, thereby reducing risks of short circuits due to the connection between positive and negative electrodes.

## Description

### CROSS-REFERENCE

The present application refers to Chinese Patent Application No. 202311481974.1 entitled "BATTERY CELL ASSEMBLY AND METHOD FOR MANUFACTURING SAME, BATTERY CELL, BATTERY, AND ELECTRIC DEVICE" and filed on November 8, 2023, which is incorporated herein by reference in its entirety.

### TECHNICAL FIELD

The present application relates to the technical field of batteries, and in particular, to a battery cell assembly and a method for manufacturing same, a battery cell, a battery, and an electric device.

### BACKGROUND

A battery is typically composed of a plurality of battery cells, and a battery cell assembly is the most crucial part in the battery cell. The battery cell assembly is mainly formed by winding or stacking a first electrode plate and a second electrode plate, and a separator is generally disposed between the first electrode plate and the second electrode plate. In a laminated battery cell assembly, the Z-folding method features a simpler process and lower device requirements compared with a battery cell assembly manufactured by stacking. However, lithium plating accumulation may occur at both ends of the stacked cell assembly, which may pierce the separator, thereby posing a risk of short circuit caused by the overlap between the positive electrode and the negative electrode.

### SUMMARY

In view of the problems, the present application provides a battery cell assembly and a method for manufacturing same, a battery cell, a battery, and an electric device, which can alleviate the risk of short circuit caused by the overlap between the positive electrode and the negative electrode resulting from separator piercing due to lithium plating accumulation at both ends of a Z-folded battery cell assembly.

In a first aspect, the present application provides a battery cell assembly. The battery cell assembly includes a first electrode plate, a plurality of second electrode plates, and separators. The separators are disposed on two opposite sides of the first electrode plate and are combined with the first electrode plate to form a composite plate, the composite plate is configured to be continuously folded in a Z-shape to form a plurality of layers of sub-composite plates, and a second electrode plate is disposed between any two adjacent layers of the sub-composite plates.

In a length direction of the second electrode plate, an isolation layer is connected between at least one side edge of each second electrode plate and each sub-composite plate.

In the above battery cell assembly, in one aspect, since the isolation layer can connect the second electrode plate and the sub-composite plate, the second electrode plate is more tightly connected to the sub-composite plate, such that the distance between the second electrode plate and the sub-composite plate is shortened, thereby reducing the gap at the corner of the composite plate, improving the transport kinetics performance of the battery, and reducing the phenomenon of lithium plating at the edge. In another aspect, since the isolation layer is disposed between the second electrode plate and the sub-composite plate, the edges of the second electrode plate and the sub-composite plate can be isolated. When lithium plating accumulation occurs at the edges, the arrangement of the isolation layer further prevents dendrites generated by lithium plating from piercing the separator, thereby reducing the risk of short circuit caused by the overlap between the positive electrode and the negative electrode, that is, the risk of short circuit caused by the overlap between the first electrode plate and the second electrode plate.

In some embodiments, a corner region is formed between any two adjacent layers of the sub-composite plates, and the isolation layer is at least located in the corner region.

During the folding process of the composite plate, the tension in the corner region is the greatest, and the tension increases the accommodating gap between two adjacent layers of the sub-composite plates. Therefore, by providing the isolation layer in the corner region and allowing the isolation layer to connect the second electrode plate and the sub-composite plate in the corner region, the gap in the corner region can be reduced, and a tighter connection is fundamentally achieved between the second electrode plate and the sub-composite plate, thereby shortening the distance between the second electrode plate and the sub-composite plate, further improving the transport kinetics performance of the battery, and reducing the phenomenon of lithium plating at the edge.

In some embodiments, in a width direction of the second electrode plate, the isolation layer extends from one end of the second electrode plate to an opposite end of the second electrode plate.

In this way, the width space of the second electrode plate can be fully utilized to enable the isolation layer to be fully connected between the second electrode plate and the adjacent sub-composite plate. This increases the connection area of the isolation layer between the second electrode plate and the sub-composite plate, thereby resulting in a tighter connection between the second electrode plate and the sub-composite plate, and reducing the gap at the corner of the composite plate. In addition, this increases the arrangement area of the isolation layer, which is more conducive to the arrangement of the isolation layer between the second electrode plate and the sub-composite plate, thereby simplifying the manufacturing process.

In some embodiments, the isolation layer includes an isolation adhesive layer, and in the length direction of the second electrode plate, the isolation adhesive layer is connected between at least one side edge of each second electrode plate and each sub-composite plate.

By providing the isolation adhesive layer, the connection of the isolation layer with the second electrode plate and the sub-composite plate can be simplified, thereby enabling a tighter connection among the three.

In some embodiments, a material of the isolation adhesive layer includes at least one of acrylate, polyvinyl ether, styrene-butadiene rubber, polyisoprene rubber, polyisobutene and butyl rubber, chloroprene rubber, and nitrile rubber.

The materials of the isolation adhesive layer described above are all liquid adhesives. The liquid adhesive can be quickly adhered to the second electrode plate when applied, and can be cured through a drying process while maintaining the adhesion, thereby enabling the isolation layer to be well formed between the second electrode plate and the sub-composite plate.

In some embodiments, a material of the isolation adhesive layer includes at least one of polyacrylates, polyvinyl esters, and ethylene-vinyl acetate copolymers.

The materials of the isolation adhesive layer described above are all solid adhesives. The solid adhesive coating process is simple and does not require processes such as drying.

In some embodiments, a material of the isolation adhesive layer includes a mixture of acrylic acid and a crosslinking agent.

The mixture of the acrylic acid and the crosslinking agent exhibits good adhesion, and thus the performance of the battery cell is not affected, the battery cell is not easily contaminated, and the adhesive application efficiency is high.

In some embodiments, in the length direction of the second electrode plate, the second electrode plate includes a current lead-out side and a non-current lead-out side opposite to each other, the isolation layer located on the current lead-out side has a first width, the isolation layer located on the non-current lead-out side has a second width, and the first width is greater than the second width.

In some embodiments, the first width ranges from mm to mm, and the second width ranges from mm to 8 mm.

In a second aspect, a method for manufacturing a battery cell assembly is provided. The method includes:
providing separators on two opposite sides of a first electrode plate, and combining the first electrode plate with the separators to form a composite plate;
continuously folding the composite plate in a Z-shape to form a plurality of layers of sub-composite plates, and placing one second electrode plate between any two adjacent layers of the sub-composite plates; in a length direction of the second electrode plate, providing an isolation material between at least one side edge of each second electrode plate and each sub-composite plate; and
pressing the Z-shaped continuously folded composite plate and the second electrode plate together to form a battery cell assembly, where an isolation layer is formed between at least one side edge of each second electrode plate and each sub-composite plate by means of the isolation material.

According to the battery cell assembly formed by the above method for manufacturing a battery cell assembly, in one aspect, since the isolation layer can connect the second electrode plate and the sub-composite plate, the second electrode plate is more tightly connected to the sub-composite plate, such that the distance between the second electrode plate and the sub-composite plate is shortened, thereby reducing the gap at the corner of the composite plate, improving the transport kinetics performance of the battery, and reducing the phenomenon of lithium plating at the edge. In another aspect, since the isolation layer is disposed between the second electrode plate and the sub-composite plate, the edges of the second electrode plate and the sub-composite plate can be isolated. When lithium plating accumulation occurs at the edges, the arrangement of the isolation layer further prevents dendrites generated by lithium plating from piercing the separator, thereby reducing the risk of short circuit caused by the overlap between the positive electrode and the negative electrode, that is, the risk of short circuit caused by the overlap between the first electrode plate and the second electrode plate.

In some embodiments, continuously folding the composite plate in a Z-shape to form the plurality of layers of sub-composite plates, and placing one second electrode plate between any two adjacent layers of the sub-composite plates; and in the length direction of the second electrode plate, providing the isolation material between at least one side edge of each second electrode plate and each sub-composite plate, specifically includes:
in the length direction of the second electrode plate, providing the isolation material on at least one side edge of each second electrode plate; and
continuously folding the composite plate in a Z-shape to form the plurality of layers of sub-composite plates, and placing one second electrode plate provided with an isolation material between any two adjacent layers of the sub-composite plates.

By providing the isolation material on the second electrode plate in advance, the arrangement of the isolation material can be simplified, and the isolation material can be uniformly distributed. Therefore, it is easier to form a reliable isolation layer between at least one side edge of each second electrode plate and each sub-composite plate, and the three are more tightly connected.

In some embodiments, continuously folding the composite plate in a Z-shape to form the plurality of layers of sub-composite plates, and placing one second electrode plate provided with the isolation material between any two adjacent layers of the sub-composite plates, specifically includes:
placing the plurality of second electrode plates provided with the isolation material on two opposite sides of the composite plate and arranging the plurality of second electrode plates in an interleaved manner in a length direction of the composite plate;
pressing the plurality of second electrode plates provided with the isolation material onto the composite plate; and
continuously folding the composite plate in a Z-shape to form the plurality of layers of sub-composite plates, and placing one second electrode plate provided with the isolation material between any two adjacent layers of the sub-composite plates.

By arranging the second electrode plates in an interleaved manner and then continuously folding the second electrode plates in a Z-shape to form the battery cell assembly, the entire manufacturing process can be simplified. In addition, by pressing the second electrode plate coated with the isolation material onto the composite plate, the distribution of the isolation material between the second electrode plate and the composite plate can be more uniform, thereby achieving a tighter and more reliable connection between the second electrode plate and the composite plate.

In some embodiments, before providing the separators on the two opposite sides of the first electrode plate and combining the first electrode plate with the separators to form the composite plate, the method further includes:
providing a plurality of folding guide parts on the first electrode plate, where the plurality of folding guide parts are spaced apart from each other in a length direction of the first electrode plate, and each folding guide part extends in a width direction of the first electrode plate; and
continuously folding the composite plate in a Z-shape to form the plurality of layers of sub-composite plates, and placing one second electrode plate between any two adjacent layers of the sub-composite plates, specifically includes:
continuously folding, along the plurality of folding guide parts, the composite plate in a Z-shape to form the plurality of layers of sub-composite plates, and placing one second electrode plate between any two adjacent layers of the sub-composite plates.

In this way, under the guidance of the folding guide part, the first electrode plate can be folded more conveniently, which helps further improve the production efficiency of the laminated battery. In addition, the arrangement of the folding guide part can reduce the stress at the folding position, making it easier to achieve a small accommodating gap between two layers of sub-composite plates after folding.

In a third aspect, a battery cell is provided. The battery cell includes the battery cell assembly according to any one of the above embodiments.

In the above battery cell, in one aspect, since the isolation layer can connect the second electrode plate and the sub-composite plate, the second electrode plate is more tightly connected to the sub-composite plate, such that the distance between the second electrode plate and the sub-composite plate is shortened, thereby reducing the gap at the corner of the composite plate, improving the transport kinetics performance of the battery, and reducing the phenomenon of lithium plating at the edge. In another aspect, since the isolation layer is disposed between the second electrode plate and the sub-composite plate, the edges of the second electrode plate and the sub-composite plate can be isolated. When lithium plating accumulation occurs at the edges, the arrangement of the isolation layer further prevents dendrites generated by lithium plating from piercing the separator, thereby reducing the risk of short circuit caused by the overlap between the positive electrode and the negative electrode, that is, the risk of short circuit caused by the overlap between the first electrode plate and the second electrode plate.

In a fourth aspect, a battery is provided. The battery includes the battery cell according to any one of the above embodiments.

In the above battery, in one aspect, since the isolation layer can connect the second electrode plate and the sub-composite plate, the second electrode plate is more tightly connected to the sub-composite plate, such that the distance between the second electrode plate and the sub-composite plate is shortened, thereby reducing the gap at the corner of the composite plate, improving the transport kinetics performance of the battery, and reducing the phenomenon of lithium plating at the edge. In another aspect, since the isolation layer is disposed between the second electrode plate and the sub-composite plate, the edges of the second electrode plate and the sub-composite plate can be isolated. When lithium plating accumulation occurs at the edges, the arrangement of the isolation layer further prevents dendrites generated by lithium plating from piercing the separator, thereby reducing the risk of short circuit caused by the overlap between the positive electrode and the negative electrode, that is, the risk of short circuit caused by the overlap between the first electrode plate and the second electrode plate.

In a third aspect, the present application further provides an electric device. The electric device includes the battery according to any one of the above embodiments.

In the above electric device, in one aspect, since the isolation layer can connect the second electrode plate and the sub-composite plate, the second electrode plate is more tightly connected to the sub-composite plate, such that the distance between the second electrode plate and the sub-composite plate is shortened, thereby reducing the gap at the corner of the composite plate, improving the transport kinetics performance of the battery, and reducing the phenomenon of lithium plating at the edge. In another aspect, since the isolation layer is disposed between the second electrode plate and the sub-composite plate, the edges of the second electrode plate and the sub-composite plate can be isolated. When lithium plating accumulation occurs at the edges, the arrangement of the isolation layer further prevents dendrites generated by lithium plating from piercing the separator, thereby reducing the risk of short circuit caused by the overlap between the positive electrode and the negative electrode, that is, the risk of short circuit caused by the overlap between the first electrode plate and the second electrode plate.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts. In the drawings:
FIG. 1 is a schematic structural diagram of a vehicle according to one or more embodiments.
FIG. 2 is a schematic diagram of an exploded structure of a battery according to one or more embodiments.
FIG. 3 is a schematic diagram of an exploded structure of a battery cell according to one or more embodiments.
FIG. 4 is a schematic structural diagram of a battery cell assembly according to one or more embodiments.
FIG. 5 is a schematic diagram of a cross-sectional structure along line A-A of the battery cell assembly shown in FIG. 4.
FIG. 6 is a schematic structural diagram of a second electrode according to one or more embodiments.
FIG. 7 is a flowchart of steps of a method for manufacturing a battery cell assembly according to one or more embodiments.
FIGs. 8(a) to 8(e) are exploded views of a manufacturing process of an electrical assembly according to one or more embodiments.
FIG. 9 is a flowchart of steps of a method for manufacturing a battery cell assembly according to another one or more embodiments.
FIG. 10 is a flowchart of steps of a method for manufacturing a battery cell assembly according to yet another one or more embodiments.

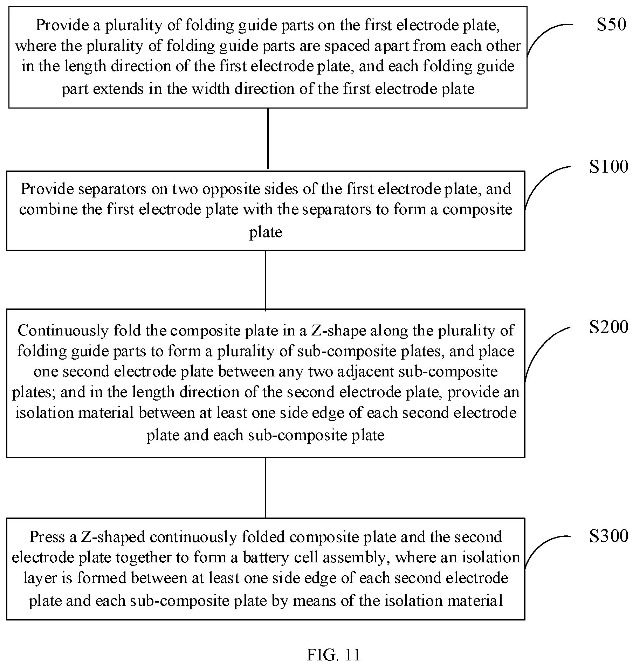

FIG. 11 is a flowchart of steps of a method for manufacturing a battery cell assembly according to still another or more embodiments.

Reference numerals in the detailed description are as follows:
vehicle 1000;
battery 100;
case 10;
first part 11; second part 12;
battery cell 20;
end cover 21, electrode terminal 211, housing 22, battery cell assembly 23, first electrode plate 231, first tab 2311, folding guide part 2312, second electrode plate 232, second tab 2321, current lead-out side 2322, non-current lead-out side 2323, separator 233, composite plate 234, sub-composite plate 2341, isolation layer 235;
first width K1;
second width K2;
controller 200;
motor 300;
shielding member 400;
corner region AA.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the associative relationship between associated objects, indicating that there are three possible relationships. For example, "1 and/or 2" may denote: the presence of 1 alone, the simultaneous presence of 1 and 2, and the presence of 2 alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

As the most representative energy storage device in the field of new energy, batteries have been increasingly widely used in the fields of mobile electronic devices, electric vehicles, energy storage, and the like. According to different manufacturing processes, batteries can be classified into wound batteries and stacked batteries. Stacked batteries are typically stacked in two ways: a simple stacking method and a Z-folding method.

In the simple stacking method, a positive electrode plate, a negative electrode plate, and a separator are slit into predetermined sizes, and then the slit positive electrode plate, negative electrode plate, and separator are stacked in the sequence of negative electrode plate-separator-positive electrode plate-separator-negative electrode plate, so as to obtain a stacked battery cell assembly. The conventional Z-folding method typically involves slitting the positive electrode plate and the negative electrode plate into predetermined sizes, and then sequentially inserting the slit positive electrode plate and negative electrode plate into a Z-folded separator, so as to obtain the stacked battery cell assembly.

To improve the stacking efficiency of the Z-folding method, a continuous composite Z-folding method is proposed. Specifically, two layers of separators are first combined with two sides of one of the anode electrode plate or the cathode electrode plate to form a composite material strip, then the other one of the anode electrode plate or the cathode electrode plate is combined with and disposed on the composite material strip, and finally, Z-folding is performed to obtain a stacked battery cell assembly. The battery cell formed by the continuous composite Z-folding method has improved energy density.

However, compared with a pure separator, the composite material strip obtained by combining the electrode plate with the separator has improved structural strength. Therefore, when the composite material strip is used for Z-folding, the composite material strip is less prone to bending, and the corner formed after bending becomes larger, leading to a larger gap between the anode electrode plate and the cathode electrode plate at the corner. This not only affects the transport kinetics performance of the battery, but also causes lithium plating at the edge. Once the separator is pierced by lithium plating accumulation, the positive electrode and the negative electrode will overlap, thereby causing the risk of short circuit.

Therefore, in order to alleviate the risk of short circuit caused by the overlap between the positive electrode and the negative electrode of the battery cell assembly formed by Z-folding in some scenarios, a battery cell assembly is designed in the embodiments of the present application. The battery cell assembly includes separators, a first electrode plate, and a plurality of second electrode plates. The separators are disposed on two opposite sides of the first electrode plate and are combined with the first electrode plate to form a composite plate, the composite plate is configured to be continuously folded in a Z-shape to form a plurality of layers of sub-composite plates, and a second electrode plate is disposed between any two adjacent layers of the sub-composite plates. In the length direction of the second electrode plate, an isolation layer is connected between at least one side edge of each second electrode plate and each sub-composite plate.

In this way, in one aspect, since the isolation layer can connect the second electrode plate and the sub-composite plate, the second electrode plate is more tightly connected to the sub-composite plate, such that the distance between the second electrode plate and the sub-composite plate is shortened, thereby reducing the gap at the corner of the composite plate, improving the transport kinetics performance of the battery, and reducing the phenomenon of lithium plating at the edge. In another aspect, since the isolation layer is disposed between the second electrode plate and the sub-composite plate, the edges of the second electrode plate and the sub-composite plate can be isolated. When lithium plating accumulation occurs at the edges, the arrangement of the isolation layer further prevents dendrites generated by lithium plating from piercing the separator, thereby reducing the risk of short circuit caused by the overlap between the positive electrode and the negative electrode, that is, reducing the risk of short circuit caused by the overlap between the first electrode plate and the second electrode plate.

The battery cell assembly disclosed in the embodiments of the present application is applied to a battery cell, and the battery cell disclosed in the embodiments of the present application may be used in, but is not limited to, electric devices such as vehicles, ships, or aircraft. The battery cell, the battery, or the like disclosed in the present application may be assembled into a power system of the electric device. This is conducive to alleviating the risk of short circuit caused by the overlap between the positive electrode and the negative electrode of the battery cell assembly formed in a Z-folded configuration, and improving the transport kinetics performance of the battery.

The battery disclosed in the embodiments of the present application may, but is not limited to, be used in electric devices such as vehicles, ships, or aircraft.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

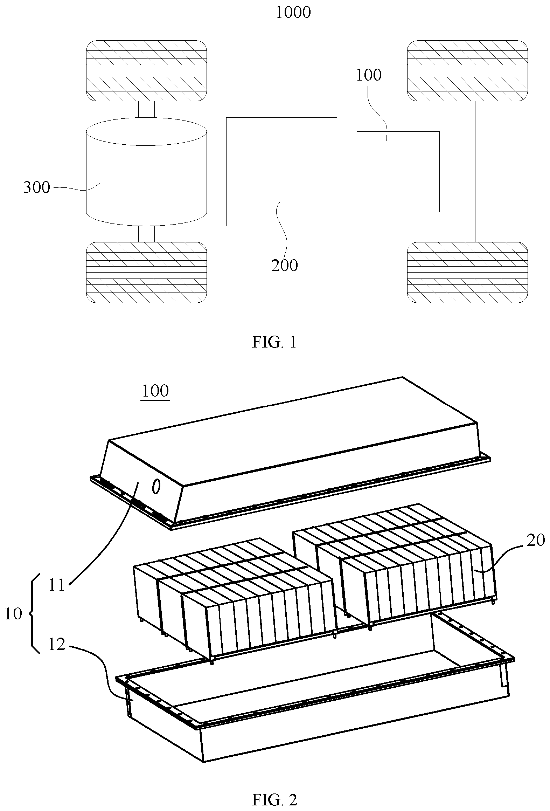

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may be of various structures. In some embodiments, the case 10 may include a first part 11 and a second part 12. The first part 11 and the second part 12 are lidded with each other, and the first part 11 and the second part 12 jointly define an accommodating space for accommodating the battery cells 20. The second part 12 may be of a hollow structure with one end open, and the first part 11 may be of a plate-shaped structure. The open side of the second part 12 is lidded with the first part 11, such that the first part 11 and the second part 12 jointly define the accommodating space. The first part 11 and the second part 12 may also both be of a hollow structure with one side open, and the open side of the second part 12 is lidded with the open side of the first part 11. Certainly, the case 10 formed by the first part 11 and the second part 12 may be in various shapes, such as a cylinder and a rectangular parallelepiped.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules 30, and then the plurality of battery modules 30 are connected in series, in parallel, or in series-parallel to form a whole, the whole being accommodated in the case 10. The battery 100 may further include other structures. For example, the battery 100 may further include a busbar component for achieving an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

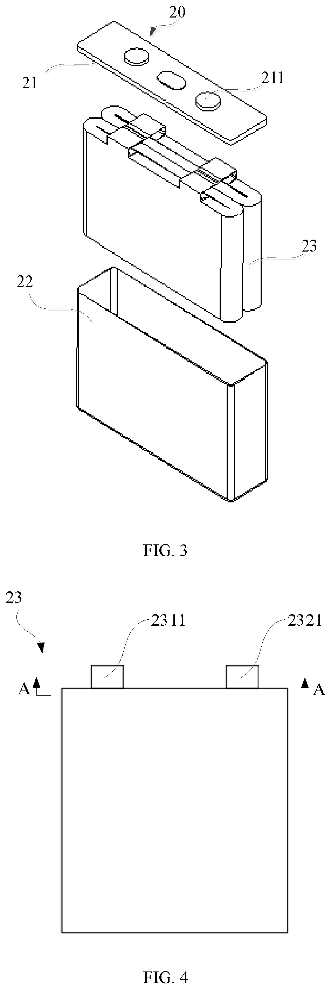

Referring to FIG. 3, FIG. 3 is a schematic view of an exploded structure of the battery cell 20 according to some embodiments of the present application. The battery cell 20 refers to the smallest unit forming a battery. As illustrated in FIG. 3, the battery cell 20 includes an end cover 21, a housing 22, a battery cell assembly 23, and other functional components.

The end cover 21 refers to a component that covers the opening of the housing 22 to isolate the internal environment of the battery cell 20 from the external environment. Without limitation, the shape of the end cover 21 may be adapted to the shape of the housing 22 to cooperate with the housing 22. Optionally, the end cover 21 may be made of a material with a certain hardness and strength (for example, an aluminum alloy), such that the end cover 21 is not easily deformed when being squeezed or collided. This enables the battery cell 20 to have higher structural strength, and the safety performance can also be improved. Functional components, such as electrode terminals 211, may be disposed on the end cover 21. The electrode terminal 211 may be configured to be electrically connected to the battery cell assembly 23 to output or input the electric energy of the battery cell 20. In some embodiments, the end cover 21 may also be provided with a pressure relief mechanism for releasing the internal pressure when the internal pressure or temperature of the battery cell 20 reaches a threshold. The end cover 21 may also be made of various materials, such as copper, iron, aluminum, stainless steel, aluminum alloy, and plastic, which is not specifically limited in the embodiments of the present application. In some embodiments, the inner side of the end cover 21 may also be provided with an insulating member, and the insulating member may be configured to isolate an electrical connection component in the housing 22 from the end cover 21 to reduce the risk of short circuits. Illustratively, the insulating member may be made of plastic, rubber, or the like.

The housing 22 is a component configured to form the internal environment of the battery cell 20 in combination with the end cover 21. The formed internal environment may be used to accommodate the battery cell assembly 23, the electrolyte, and other components. The housing 22 and the end cover 21 may be independent components. An opening may be formed in the housing 22, and at the opening, the end cover 21 lids the opening to form the internal environment of the battery cell 20. Without limitation, the end cover 21 and the housing 22 may also be integrated. Specifically, the end cover 21 and the housing 22 may form a common connecting surface before other components are placed in the housing, and when the interior of the housing 22 needs to be encapsulated, the housing 22 is lidded with the end cover 21. The housing 22 may be in various shapes and sizes, such as a rectangular parallelepiped, a cylinder, and a hexagonal prism. Specifically, the shape of the housing 22 may be determined based on the specific shape and size of the battery cell assembly 23. The housing 22 may be made of various materials, such as copper, iron, aluminum, stainless steel, aluminum alloy, and plastic, which is not specially limited in the embodiments of the present application.

The battery cell assembly 23 is a component where the electrochemical reaction occurs in the battery cell 100. One or more battery cell assemblies 23 may be accommodated in the housing 22. The battery cell assembly 23 is mainly formed by stacking a first electrode plate 231 and a second electrode plate 232, and a separator 233 is generally disposed between the first electrode plate 231 and the second electrode plate 232. The first electrode plate 231 and the second electrode plate 232 may be a positive electrode plate and a negative electrode plate, respectively. The portions of the first electrode plate 231 and the second electrode plate 232 that contain active substance constitute the main body part of the battery cell assembly 23, and the portions of the first electrode plate 231 and the second electrode plate 232 that do not contain active substance respectively constitute a first tab 2311 and a second tab 2321. The first tab 2311 and the second tab 2321 may be located together at one end of the main body part or separately at two ends of the main body part. During charging and discharging of the battery 100, the active substance reacts with the electrolyte, and the first tab 2311 and the second tab 2321 are connected to the electrode terminal 211 to form a current circuit.

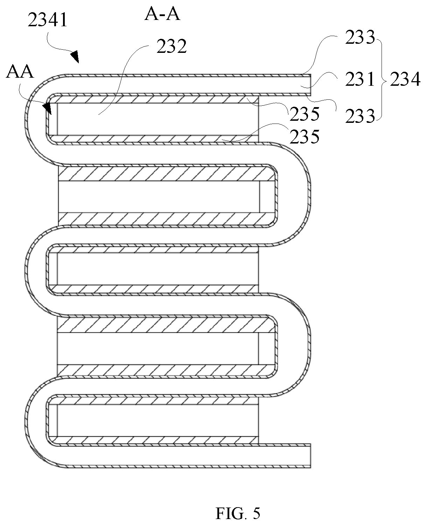

FIG. 4 is a schematic structural diagram of a battery cell assembly according to one or more embodiments; FIG. 5 is a schematic diagram of a cross-sectional structure along line A-A of the battery cell assembly shown in FIG. 4. Referring to the drawings, the embodiments of the present application provide a battery cell assembly 23. The battery cell assembly 23 includes a first electrode plate 231, a plurality of second electrode plates 232, and separators 233. The separators 233 are disposed on two opposite sides of the first electrode plate 231 and are combined with the first electrode plate 231 to form a composite plate 234. The composite plate 234 is configured to be continuously folded in a Z-shape to form a plurality of layers of sub-composite plates 2341. A second electrode plate 232 is disposed between any two adjacent layers of the sub-composite plates 2341. In the length direction of the second electrode plate 232, an isolation layer 235 is connected between at least one side edge of each second electrode plate 232 and each sub-composite plate 234.

The first electrode plate 231 may be a positive electrode plate, and the second electrode plate 232 may be a negative electrode plate. The positive electrode plate includes a positive electrode current collector and a positive electrode active substance layer. The surface of the positive electrode current collector is coated with the positive electrode active substance layer. The current collector not coated with the positive electrode active substance layer protrudes from the current collector coated with the positive electrode active substance layer. The current collector not coated with the positive electrode active substance layer serves as a positive electrode tab, i.e., the first tab 2311, for current output. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The current collector not coated with the negative electrode active substance layer protrudes from the current collector coated with the negative electrode active substance layer. The current collector not coated with the negative electrode active substance layer serves as a negative electrode tab, i.e., the second tab 2321, for current output. The material of the negative electrode current collector may be copper, and the negative electrode active substance may be carbon, silicon, or the like. To ensure the passing of a large current without fusing, a plurality of positive electrode tabs are provided and stacked together, and a plurality of negative electrode tabs are provided and stacked together.

The separator 233 is also referred to as a separation film, and any well-known porous-structured separation film having electrochemical stability and chemical stability may be selected. For example, the separator may be a single-layer or multi-layer film made of one or more of glass fiber, non-woven fabric, polyethylene, polypropylene, and polyvinylidene fluoride. The material of the separation film may be polypropylene (PP), polyethylene (PE), or the like.

The separators 233 being disposed on two opposite sides of the first electrode plate 231 means that two separators 233 are provided, one separator is disposed on one side of the first electrode plate 231, and the other separator is disposed on the other side of the first electrode plate 231. It should be noted here that the two opposite sides of the first electrode plate 231 refer to two opposite large surface sides of the first electrode plate 231, that is, two sides in the thickness direction of the first electrode plate 231.

The separator 233 being combined with the first electrode plate 231 to form the composite plate 234 means that the separator 233 and the first electrode plate 231 can form a whole. Specifically, the combination of the separator 233 and the first electrode plate 231 may be an adhesive combination. For example, an additional adhesive material is disposed between the separator 233 and the first electrode plate 231 for adhesive combination, or the separator 233 may have its own adhesive material. By pressing together with the first electrode plate 231, the separator 233 can be adhesively combined with the first electrode plate 231.

The composite plate 234 being configured to be continuously folded in a Z-shape means that the composite plate 234 is folded in a Z-folding manner, which is actually equivalent to the S-folding or W-folding manner. After the composite plate 234 is folded in a Z-shape, a plurality of layers of sub-composite plates 2341 are formed. Two adjacent layers of sub-composite plates 2341 are connected on the same side to form a corner portion or a bent portion, and a certain accommodating gap can be formed therebetween. The accommodating gap can accommodate the second electrode plate 232. It should be noted here that the dimensions of each sub-composite plate 2341 may be the same.

The length direction of the second electrode plate 232 is the vertical direction as shown in FIG. 3. The isolation layer 235 can separate the side edge of the second electrode plate 232 from the sub-composite plate 2341.

Therefore, in the battery cell assembly 23 according to the embodiments of the present application, in one aspect, since the isolation layer 235 can connect the second electrode plate 232 and the sub-composite plate 2341, the second electrode plate 232 is more tightly connected to the sub-composite plate 2341, such that the distance between the second electrode plate and the sub-composite plate is shortened, thereby reducing the gap at the corner of the composite plate 234, improving the transport kinetics performance of the battery 100, and reducing the phenomenon of lithium plating at the edge. In another aspect, since the isolation layer 235 is disposed between the second electrode plate 232 and the sub-composite plate 2341, the edges of the second electrode plate 232 and the sub-composite plate 2341 can be isolated. When lithium plating accumulation occurs at the edges, the arrangement of the isolation layer 235 further prevents dendrites generated by lithium plating from piercing the separator 233, thereby reducing the risk of short circuit caused by the overlap between the positive electrode and the negative electrode, that is, the risk of short circuit caused by the overlap between the first electrode plate 231 and the second electrode plate 232.

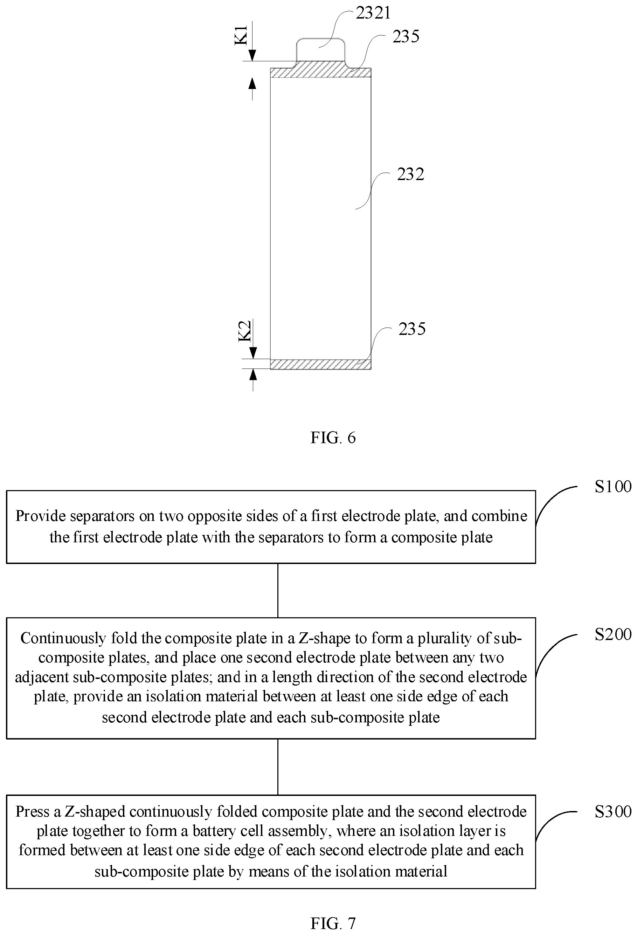

Referring to FIGs. 5 and 6, in a specific embodiment of the present application, in the length direction of the second electrode plate 232, an isolation layer 235 is connected between both side edges of each second electrode plate 232 and each sub-composite plate 2341.

In this way, both sides of the second electrode plate 232 are subjected to the action of the isolation layer 235, and both side edges of the second electrode plate 232 are more tightly connected to each sub-composite plate 2341. This reduces the phenomenon of lithium plating at both side edges of the second electrode plate 232, and prevents, via the isolation layer 235, dendrites generated by lithium plating at both side edges of the second electrode plate 232 from piercing the separator 233, thereby reducing the risk of short circuit caused by the overlap between the positive electrode and the negative electrode.

Referring to FIG. 5, according to some embodiments of the present application, a corner region AA is formed between any two adjacent layers of the sub-composite plates 2341, and the isolation layer 235 is at least located in the corner region AA.

It is not difficult to understand that the corner region AA refers to a region where the sub-composite plate 234 is folded. Specifically, it is a region where two adjacent sub-composite plates 2341 are connected to each other after the composite plate 234 is folded. In some embodiments, the cross-sectional shape of the corner region AA is semicircular or triangular.

During the folding process of the composite plate 234, the tension in the corner region AA is the greatest, and the tension increases the accommodating gap between two adjacent layers of the sub-composite plates 2341. Therefore, by providing the isolation layer 235 in the corner region AA and allowing the isolation layer 235 to connect the second electrode plate 232 and the sub-composite plate 2341 in the corner region AA, the gap in the corner region AA can be reduced, and a tighter connection is fundamentally achieved between the second electrode plate 232 and the sub-composite plate 2341, thereby shortening the distance between the second electrode plate and the sub-composite plate, further improving the transport kinetics performance of the battery 100, and reducing the phenomenon of lithium plating at the edge.

According to some embodiments of the present application, in the width direction of the second electrode plate 232, the isolation layer 235 extends from one end of the second electrode plate 232 to the opposite end of the second electrode plate 232.

The width direction of the second electrode plate 232 is perpendicular to the length direction of the second electrode plate 232. Specifically, the width direction of the second electrode plate 232 is the horizontal direction shown in FIG. 3.

When the isolation layer 235 extends from one end of the second electrode plate 232 to the opposite end of the second electrode plate 232, the isolation layer 235 covers from one end of the second electrode plate 232 to the opposite end of the second electrode plate 232.

In this way, the width space of the second electrode plate 232 can be fully utilized to enable the isolation layer 235 to be fully connected between the second electrode plate 232 and the adjacent sub-composite plate 2341. This increases the connection area of the isolation layer 235 between the second electrode plate 232 and the sub-composite plate 2341, thereby resulting in a tighter connection between the second electrode plate and the sub-composite plate, and reducing the gap at the corner of the composite plate 234. In addition, this increases the arrangement area of the isolation layer 235, which is more conducive to the arrangement of the isolation layer 235 between the second electrode plate 232 and the sub-composite plate 2341, thereby simplifying the manufacturing process.

In other embodiments, the isolation layer 235 may also be arranged in an intermittent manner in the width direction of the second electrode plate 232. For example, the isolation layer 235 includes a plurality of sub-isolation segments extending in the width direction of the second electrode plate 232, and the plurality of sub-isolation segments are spaced apart from each other.

According to some embodiments of the present application, the isolation layer 235 includes an isolation adhesive layer, and the isolation adhesive layer is connected between at least one side edge of each second electrode plate 232 and each sub-composite plate 2341.

By providing the isolation adhesive layer, the connection of the isolation layer 235 with the second electrode plate 232 and the sub-composite plate 2341 can be simplified, thereby enabling a tighter connection among the three.

Further, the isolation adhesive layer may be formed by the following method: precoating one side edge of the second electrode plate 232 and/or the corresponding position of the sub-composite plate 2341 with an isolation adhesive material, then providing the second electrode plate 232 between adjacent sub-composite plates 2341 to achieve the connection between the second electrode plate 232 and the sub-composite plate 2341, and finally forming the isolation adhesive layer. In other embodiments, the isolation adhesive layer may also be manufactured in advance in the form of a "double-sided adhesive tape" and bonded to one side edge of the second electrode plate 232 and/or the corresponding position of the sub-composite plate 2341, and then the second electrode plate 232 is disposed between adjacent sub-composite plates 2341, thereby achieving the connection between the second electrode plate 232 and the sub-composite plate 2341.

Furthermore, the material of the isolation adhesive layer includes at least one of acrylate, polyvinyl ether, styrene-butadiene rubber, polyisoprene rubber, polyisobutene and butyl rubber, chloroprene rubber, and nitrile rubber.

The materials of the isolation adhesive layer described above are all liquid adhesives. The liquid adhesive can be quickly adhered to the second electrode plate 232 when applied, and can be cured through a drying process while maintaining the adhesion, thereby enabling the isolation layer 235 to be well formed between the second electrode plate 232 and the sub-composite plate 2341.

In the embodiments of the present application, the material of the isolation adhesive layer is acrylate, which is a copolymer of acrylate monomers and other ethylene monomers, featuring good adhesion, simple composition, and good transparency.

In some other embodiments, the material of the isolation adhesive layer may further include at least one of polyacrylates, polyvinyl esters, and ethylene-vinyl acetate copolymers.

The materials of the isolation adhesive layer described above are all solid adhesives. The solid adhesive coating process is simple and does not require processes such as drying.

In other embodiments, the material of the isolation adhesive layer includes a mixture of acrylic acid and a crosslinking agent.

The mixture of the acrylic acid and the crosslinking agent exhibits good adhesion, and thus the performance of the battery cell is not affected, the battery cell is not easily contaminated, and the adhesive application efficiency is high.

Referring to FIG. 6, according to some embodiments of the present application, in the length direction of the second electrode plate 232, the second electrode plate 232 includes a current lead-out side 2322 and a non-current lead-out side 2323 opposite to each other, the isolation layer 235 located on the current lead-out side 2322 has a first width K1, the isolation layer 235 located on the non-current lead-out side 2323 has a second width K2, and the first width K1 is greater than the second width K2.

In the embodiments of the present application, the current lead-out side 2322 is one side of the second electrode plate 232 provided with the second tab 2321, and the non-current lead-out side 2323 is one side of the second electrode plate 232 not provided with the second tab 2321.

The width of the isolation layer 235 refers to the dimension measured in the length direction of the second electrode plate 232.

Due to the presence of a ceramic coating on the cathode tab side, the first width K1 being greater than the second width K2 can reduce the impact on the ceramic adhesion, enhance the combination effect between the first electrode plate 231 and the second electrode plate 232 at the corner, and reduce the gap between the first electrode plate 231 and the second electrode plate 232, thereby reducing the risk of lithium plating.

Optionally, the first width K1 ranges from 1 mm to 10 mm, and the second width K2 ranges from 1 mm to 8 mm.

It has been found through research that when the first width K1 is 10 mm and the second width K2 is 8 mm, the combination effect and the isolation effect between the first electrode plate 231 and the second electrode plate 232 are better, thereby further reducing the occurrence of lithium plating at the edge.

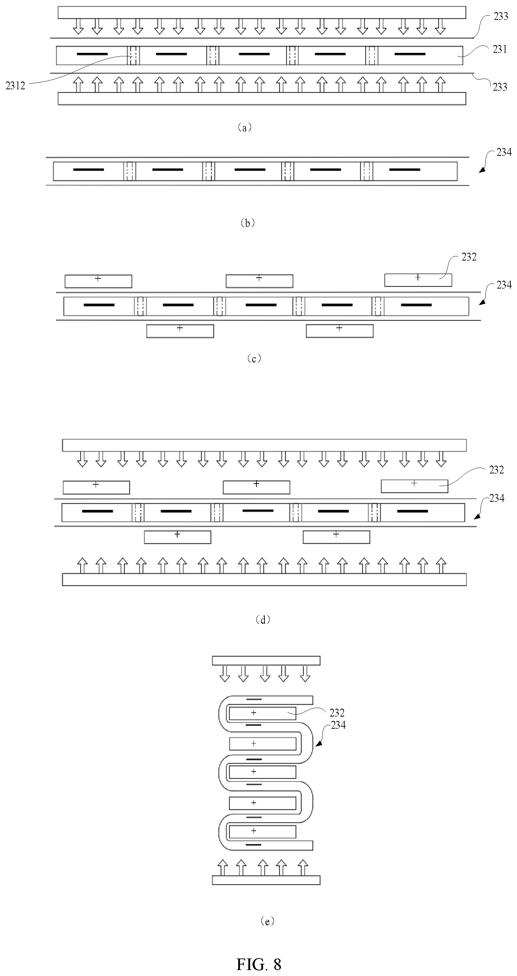

Referring to FIG. 8, in some embodiments, to facilitate the folding of the composite plate 234, the first electrode plate 231 is provided with a folding guide part 2312 to guide the folding of the first electrode plate 231.

Under the guidance of the folding guide part 2312, the first electrode plate 231 can be folded more conveniently, which helps further improve the production efficiency of the laminated battery. In addition, the arrangement of the folding guide part 2312 can reduce the stress at the folding position, making it easier to achieve a small accommodating gap between two layers of sub-composite plates 2341 after folding.

The structure of the folding guide part 2312 may be of various types. For example, in some embodiments, the folding guide part 2312 includes a score or a fold line. The provided score or fold line can effectively serve as a folding guide, such that the first electrode plate 231 can be folded along the corresponding score or fold line, thereby enabling rapid folding and making the folding position less prone to deviation. It can be understood that the score is an etched mark that is recessed downward from the etched surface, thereby forming a weak part with a certain depth. The fold line is a mark of a fold, which is not recessed downward from the folded surface and has no depth.

In addition, the folding guide part 2312 may have various shapes. For example, in some embodiments, the folding guide part 2312 is in the form of a continuous line or an intermittent line.

The folding guide part 2312 provided in the above embodiments may be parallel to the width direction of the first electrode plate 231, or may be inclined relative to the width direction of the first electrode plate 231. It can be understood that the width direction of the first electrode plate 231 refers to the extension direction of the shorter side of the surface, perpendicular to the thickness direction, of the first electrode plate 231, which is also referred to as the transverse direction of the first electrode plate 231. When the folding guide part 2312 is parallel to the width direction of the first electrode plate 231, the processing of the folding guide part 2312 is relatively convenient.

It should also be noted that the number of the folding guide parts 2312 should be consistent with the number of the second electrode plates 232 in the battery cell assembly 23.

According to some embodiments of the present application, referring to FIGs. 4 to 9, a battery cell assembly 23 is provided. The battery cell assembly includes a first electrode plate 231, a plurality of second electrode plates 232, and separators 233. The separators 233 are disposed on two opposite sides of the first electrode plate 231 and are combined with the first electrode plate 231 to form a composite plate 234. The composite plate 234 is configured to be continuously folded in a Z-shape to form a plurality of layers of sub-composite plates 2341. A second electrode plate 232 is disposed between any two adjacent layers of the sub-composite plates 2341. In the length direction of the second electrode plate 232, an isolation adhesive layer is connected between each of the two opposite side edges of each second electrode plate 232 and each sub-composite plate 234. In the width direction of the second electrode plate 232, the isolation adhesive layer extends from one end of the second electrode plate 232 to the opposite end of the second electrode plate 232. A corner region AA is formed between any two adjacent layers of the sub-composite plates 2341, and the isolation adhesive layer extends to the corner region AA. In the length direction of the second electrode plate 232, the second electrode plate 232 includes a current lead-out side 2322 and a non-current lead-out side 2323 opposite to each other, the isolation layer 235 located on the current lead-out side 2322 has a first width K1, the isolation layer 235 located on the non-current lead-out side 2323 has a second width K2, and the first width K1 is greater than the second width K2.

Next, referring to FIGs. 7 and 8, the embodiments of the present application further provide a method for manufacturing a battery cell assembly. The method includes the following steps.

In S100, separators 233 are disposed on two opposite sides of a first electrode plate 231, and the first electrode plate 231 is combined with the separators 233 to form a composite plate 234.

In S200, the composite plate 234 is continuously folded in a Z-shape to form a plurality of layers of sub-composite plates 2341, and one second electrode plate 232 is placed between any two adjacent layers of the sub-composite plates 2341; and in the length direction of the second electrode plate 232, an isolation material is disposed between at least one side edge of each second electrode plate 232 and each sub-composite plate 2341.

The isolation material may be an isolation adhesive, such as the solid adhesive or the liquid adhesive described above.

In S300, the Z-shaped continuously folded composite plate 234 and the second electrode plate 232 are pressed together to form a battery cell assembly 23. An isolation layer is formed between at least one side edge of each second electrode plate 232 and each sub-composite plate 2341 by means of the isolation material.

The pressing may be achieved by rolling with a compression roller or by overall downward pressing using a pressing block. In addition, the pressing may adopt hot pressing, such that the loose Z-shaped composite plate 234 and the second electrode plate 232 can be compacted.

When the isolation material is an isolation adhesive, the isolation layer formed by the isolation material is an isolation adhesive layer.

In the battery cell assembly 23 formed in this way, in one aspect, since the isolation layer 235 can connect the second electrode plate 232 and the sub-composite plate 2341, the second electrode plate 232 is more tightly connected to the sub-composite plate 2341, such that the distance between the second electrode plate and the sub-composite plate is shortened, thereby reducing the gap at the corner of the composite plate 234, improving the transport kinetics performance of the battery 100, and reducing the phenomenon of lithium plating at the edge. In another aspect, since the isolation layer 235 is disposed between the second electrode plate 232 and the sub-composite plate 2341, the edges of the second electrode plate 232 and the sub-composite plate 2341 can be isolated. When lithium plating accumulation occurs at the edges, the arrangement of the isolation layer 235 further prevents dendrites generated by lithium plating from piercing the separator 233, thereby reducing the risk of short circuit caused by the overlap between the positive electrode and the negative electrode, that is, the risk of short circuit caused by the overlap between the first electrode plate 231 and the second electrode plate 232.

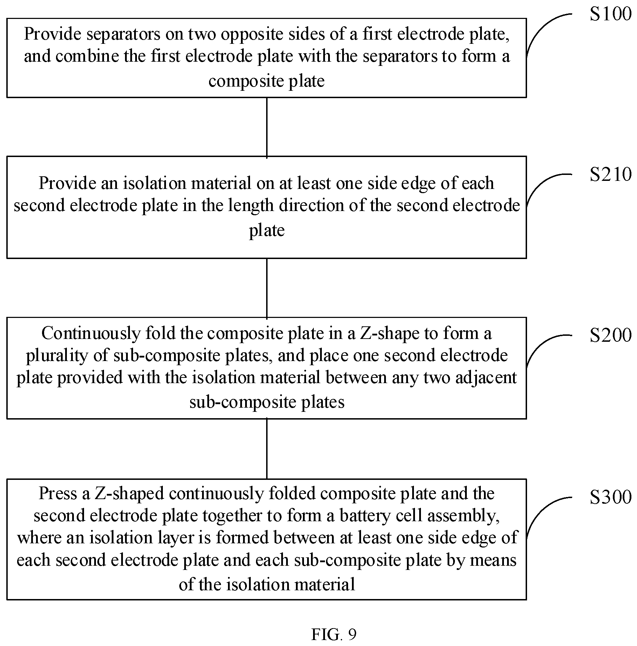

Referring to FIG. 9, according to some embodiments of the present application, S200 specifically includes:

In S210, in the length direction of the second electrode plate 232, an isolation material is disposed on at least one side edge of each second electrode plate 232.

The isolation material may extend, in the width direction of the second electrode plate 232, from one end of the second electrode plate 232 to the opposite end.

The isolation material may be provided on the side edge of the second electrode plate 232 by coating, spray coating, sputtering, or the like. When the above methods are adopted, a shielding member 400 may be used to shield the portion of the second electrode plate 232 where the isolation material is not required, such that the isolation material is disposed only on the side edge of the second electrode plate 232.

In S220, the composite plate 234 is continuously folded in a Z-shape to form a plurality of layers of sub-composite plates 2341, and one second electrode plate 232 provided with the isolation material is placed between any two adjacent layers of the sub-composite plates 2341.

By providing the isolation material on the second electrode plate 232 in advance, the arrangement of the isolation material can be simplified, and the isolation material can be uniformly distributed. Therefore, it is easier to form a reliable isolation layer 235 between at least one side edge of each second electrode plate 232 and each sub-composite plate 2341, and the three are more tightly connected.

In other embodiments, the composite plate 234 may also be continuously folded in a Z-shape to form a plurality of layers of sub-composite plates 2341, and after one second electrode plate 232 is placed between any two adjacent layers of the sub-composite plates 2341, an isolation material may be disposed between at least one side edge of each second electrode plate 232 and each sub-composite plate 2341.

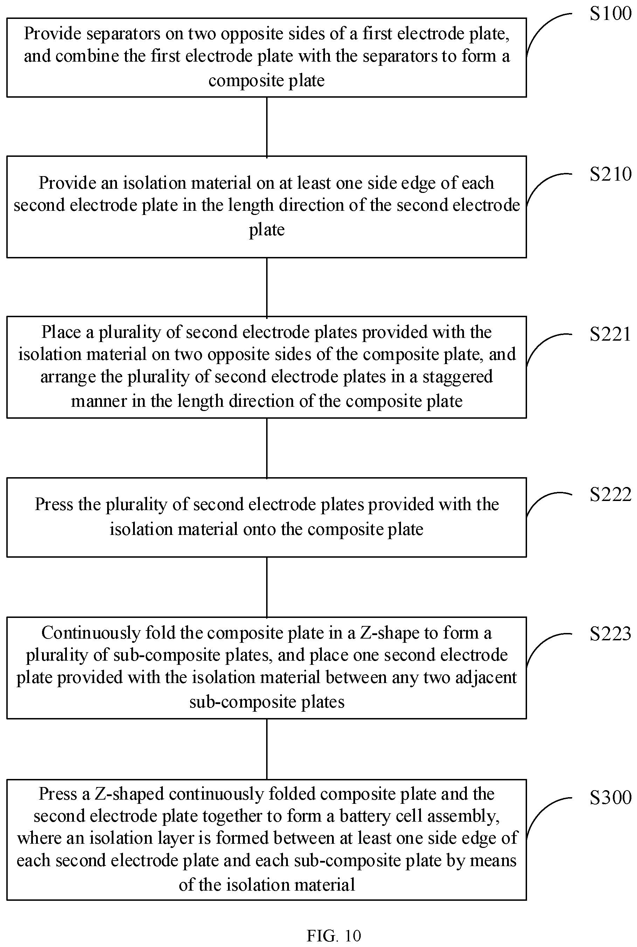

Referring to FIGs. 8 and 10, further, step S220 specifically includes:

In S221, a plurality of second electrode plates 232 provided with the isolation material are placed on two opposite sides of the composite plate 234 and are arranged in an interleaved manner in the length direction of the composite plate 234.

The plurality of second electrode plates 232 provided with the isolation material being placed on the two opposite sides of the composite plate 234 means that the plurality of second electrode plates 232 provided with the isolation material are placed on two sides of the composite plate 234 in the thickness direction. Specifically, the thickness direction of the composite plate 234 is the Z direction shown in FIG. 6. By arranging the plurality of second electrode plates 232 provided with the isolation material on the two opposite sides of the composite plate 234 in an interleaved manner in the length direction of the composite plate 234, the projections of every two adjacent second electrode plates 232, in the thickness direction of the composite plate 234, toward the second electrode plates 232 can be spaced apart from each other in the length direction of the composite plate 234.

In S222, the plurality of second electrode plates 232 provided with the isolation material are pressed onto the composite plate 234.

The pressing may be achieved by rolling with a compression roller or by overall downward pressing using a pressing block.

In S223, the composite plate 234 is continuously folded in a Z-shape to form the plurality of layers of sub-composite plates 2341, and one second electrode plate 232 provided with the isolation material is placed between any two adjacent layers of the sub-composite plates 2341.

By arranging the second electrode plates 232 in an interleaved manner and then continuously folding the second electrode plates in a Z-shape to form the battery cell assembly 23, the entire manufacturing process can be simplified. In addition, by pressing the second electrode plate 232 coated with the isolation material onto the composite plate 234, the distribution of the isolation material between the second electrode plate 232 and the composite plate 234 can be more uniform, thereby achieving a tighter and more reliable connection between the second electrode plate and the composite plate.

Referring to FIGs. 9 and 10, according to some embodiments of the present application, before S100, the method further includes:

In S50, a plurality of folding guide parts 2312 are disposed on the first electrode plate 231, the plurality of folding guide parts 2312 are spaced apart from each other in the length direction of the first electrode plate 231, and each folding guide part 2312 extends in the width direction of the first electrode plate 231.

The composite plate 234 being continuously folded in a Z-shape to form the plurality of layers of sub-composite plates 2341, and one second electrode plate 232 being placed between any two adjacent layers of the sub-composite plates 2341, specifically includes:
continuously folding, along the plurality of folding guide parts 2312, the composite plate 234 in a Z-shape to form the plurality of layers of sub-composite plates 2341, and placing one second electrode plate 232 between any two adjacent layers of the sub-composite plates 2341.

In this way, under the guidance of the folding guide part 2312, the first electrode plate 231 can be folded more conveniently, which helps further improve the production efficiency of the laminated battery. In addition, the arrangement of the folding guide part 2312 can reduce the stress at the folding position, making it easier to achieve a small accommodating gap between two layers of sub-composite plates 2341 after folding.

Referring to FIG. 8, according to some embodiments of the present application, a method for manufacturing a battery cell assembly is provided. The method specifically includes:
1. A score is formed on an anode electrode plate by laser etching, and both sides of the anode electrode plate and the separation film are roll-pressed and combined under a pressure of 0.1 Mpa to 0.5 Mpa to form an anode-separator composite material strip;
2. Liquid adhesive or solid adhesive of a certain specification is applied to the edge regions of the cathode electrode plate on the front and back sides, such that both ends of the cathode and the separation film form a separation film. The width of the spray-coated region on the tab side of the cathode electrode plate is 1 mm to 10 mm, and the width of the spray-coated area on the non-tab side of the cathode electrode plate is 1 mm to 8 mm;
3. After adhesive application, the cathode electrode plate is roll-pressed and combined with the anode-separator composite material strip via a cathode feeding mechanism, and upon the completion of combination, the composite material strip is Z-folded through an anode score; and
4. The anode-separator-cathode combination is completed by hot pressing under a pressure of 5-10 Mpa.

Additionally, the embodiments of the present application further provide a battery cell 20. The battery cell includes the battery cell assembly 23 according to any one of the above embodiments.

Additionally, the embodiments of the present application further provide a battery 100. The battery includes the battery cell 20 according to any one of the above embodiments.

In addition, the embodiments of the present application further provide an electric device. The electric device includes the battery 100 according to any one of the above embodiments.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell assembly, comprising a first electrode plate, a plurality of second electrode plates, and separators, wherein the separators are disposed on two opposite sides of the first electrode plate and are combined with the first electrode plate to form a composite plate, the composite plate is configured to be continuously folded in a Z-shape to form a plurality of layers of sub-composite plates, and a second electrode plate is disposed between any two adjacent sub-composite plates,
wherein in a length direction of the second electrode plate, an isolation layer is connected between at least one side edge of each second electrode plate and each sub-composite plate.

2. The battery cell assembly according to claim 1, wherein a corner region is formed between any two adjacent layers of the sub-composite plates, and the isolation layer is at least located in the corner region.

3. The battery cell assembly according to claim 1 or 2, wherein in a width direction of the second electrode plate, the isolation layer extends from one end of the second electrode plate to an opposite end of the second electrode plate.

4. The battery cell assembly according to any one of claims 1 to 3, wherein the isolation layer comprises an isolation adhesive layer, and in the length direction of the second electrode plate, the isolation adhesive layer is connected between at least one side edge of each second electrode plate and each sub-composite plate.

5. The battery cell assembly according to claim 4, wherein a material of the isolation adhesive layer comprises at least one of acrylate, polyvinyl ether, styrene-butadiene rubber, polyisoprene rubber, polyisobutene and butyl rubber, chloroprene rubber, and nitrile rubber.

6. The battery cell assembly according to claim 4, wherein a material of the isolation adhesive layer comprises at least one of polyacrylates, polyvinyl esters, and ethylene-vinyl acetate copolymers.

7. The battery cell assembly according to claim 4, wherein a material of the isolation adhesive layer comprises a mixture of acrylic acid and a crosslinking agent.

8. The battery cell assembly according to any one of claims 1 to 7, wherein in the length direction of the second electrode plate, the second electrode plate comprises a current lead-out side and a non-current lead-out side opposite to each other, the isolation layer located on the current lead-out side has a first width, the isolation layer located on the non-current lead-out side has a second width, and the first width is greater than the second width.

9. The battery cell assembly according to claim 8, wherein the first width ranges from 1 mm to 10 mm, and the second width ranges from 1 mm to 8 mm.

10. A method for manufacturing a battery cell assembly, comprising:
providing separators on two opposite sides of a first electrode plate, and combining the first electrode plate with the separators to form a composite plate;
continuously folding the composite plate in a Z-shape to form a plurality of layers of sub-composite plates, and placing one second electrode plate between any two adjacent sub-composite plates; in a length direction of the second electrode plate, providing an isolation material between at least one side edge of each second electrode plate and each sub-composite plate; and
pressing the Z-shaped continuously folded composite plate and the second electrode plate together to form a battery cell assembly, wherein an isolation layer is formed between at least one side edge of each second electrode plate and each sub-composite plate by means of the isolation material.

11. The method for manufacturing a battery cell assembly according to claim 10, wherein continuously folding the composite plate in a Z-shape to form the plurality of layers of sub-composite plates, and placing one second electrode plate between any two adjacent sub-composite plates; and in the length direction of the second electrode plate, providing the isolation material between at least one side edge of each second electrode plate and each sub-composite plate, specifically comprises:
in the length direction of the second electrode plate, providing the isolation material on at least one side edge of each second electrode plate; and
continuously folding the composite plate in a Z-shape to form the plurality of layers of sub-composite plates, and placing one second electrode plate provided with an isolation material between any two adjacent sub-composite plates.

12. The method for manufacturing a battery cell assembly according to claim 11, wherein continuously folding the composite plate in a Z-shape to form the plurality of layers of sub-composite plates, and placing one second electrode plate provided with the isolation material between any two adjacent sub-composite plates, specifically comprises:
placing the plurality of second electrode plates provided with the isolation material on two opposite sides of the composite plate and arranging the plurality of second electrode plates in an interleaved manner in a length direction of the composite plate;
pressing the plurality of second electrode plates provided with the isolation material onto the composite plate; and
continuously folding the composite plate in a Z-shape to form the plurality of layers of sub-composite plates, and placing one second electrode plate provided with the isolation material between any two adjacent sub-composite plates.

13. The method for manufacturing a battery cell assembly according to any one of claims 10 to 12, wherein before providing the separators on the two opposite sides of the first electrode plate and combining the first electrode plate with the separators to form the composite plate, the method further comprises:
providing a plurality of folding guide parts on the first electrode plate, wherein the plurality of folding guide parts are spaced apart from each other in a length direction of the first electrode plate, and each folding guide part extends in a width direction of the first electrode plate; and
continuously folding the composite plate in a Z-shape to form the plurality of layers of sub-composite plates, and placing one second electrode plate between any two adjacent sub-composite plates, specifically comprises:
continuously folding the composite plate in a Z-shape along the plurality of folding guide parts to form the plurality of layers of sub-composite plates, and placing one second electrode plate between any two adjacent sub-composite plates.

14. A battery cell, comprising the battery cell assembly according to any one of claims 1 to 9.

15. A battery, comprising the battery cell according to claim 14.

16. An electric device, comprising the battery according to claim 15.
